# EUROPÄISCHE PATENTSCHRIFT

(11) **EP 3 491 272 B1**
(45) Veröffentlichungstag und Bekanntmachung des Hinweises auf die Patenterteilung: **08.09.2021**
(21) Anmeldenummer: 17745666.2
(22) Anmeldetag: 14.07.2017
(51) Int. Cl.: F16H 3/72

(54) **ANTRIEBSVORRICHTUNG MIT ÜBERLAGERUNGSGETRIEBE**
DRIVE DEVICE WITH SPEED MODULATION GEARBOX
DISPOSITIF D'ENTRAINEMENT COMPORTANT UNE BOÎTE DE SUPERPOSITION

(30) Priorität: 26.07.2016 DE 102016213639; 23.02.2017 DE 102017103698
(43) Veröffentlichungstag der Anmeldung: 05.06.2019
(73) Patentinhaber: Voith Patent GmbH, 89522 Heidenheim (DE)
(72) Erfinder: STEINER, Stefan, 91583 Schillingsfürst (DE); STOLZ, Tobias, 74589 Satteldorf (DE)
(74) Vertreter: Voith Patent GmbH - Patentabteilung
(86) Internationale Anmeldenummer: PCT/EP2017/067828
(87) Internationale Veröffentlichungsnummer: WO 2018/019612

(56) Entgegenhaltungen:
- WO-A1-2016/172742
- DE-A1-102014 210 870
- DE-A1-102014 225 738
- DE-A1-102015 107 934
- DE-C- 612 823
- US-A1- 2003 100 395
- US-A1- 2008 227 576
- US-A1- 2010 262 322

## Beschreibung

Die Erfindung betrifft eine Antriebsvorrichtung umfassend ein Überlagerungsgetriebe mit einem Planetengetriebe, eine Hauptantriebsmaschine, die mit einer Eingangswelle des Überlagerungsgetriebes verbunden ist, zwei Nebenantriebe, die über je eine Triebverbindung mit dem Planetengetriebe verbunden sind, eine Ausgangswelle des Überlagerungsgetriebes, welche mit einer Arbeitsmaschine verbunden werden kann, wobei das Planetengetriebe ein Hohlrad, ein Sonnenrad, einen Planetenträger und mehrere Planetenrädern aufweist, wobei diese Triebverbindungen der Nebenantriebe jeweils über eine Räderkette mit je einem gestuften Zwischenrad erfolgt, wobei die Eingangswelle mit dem Hohlrad, die Abtriebswelle mit dem Sonnenrad und die Nebenantriebe über eine Triebverbindung mit konstanter Übersetzung mit dem Planetenträger verbunden sind.

Bei einem Überlagerungsgetriebe werden allgemein mindestens zwei Wellen des Planetengetriebes durch voneinander unabhängige Antriebe so angetrieben, dass die Drehzahlen an einer weiteren Welle, der Ausgangswelle, addiert oder subtrahiert werden. Ist einer der Antriebe regelbar, dann kann so eine stufenlose Drehzahlregelung für die Ausgangswelle erreicht werden. Im vorliegenden Fall werden zwei Wellen angetrieben, wobei eine Welle von der Hauptantriebsmaschine angetrieben wird und eine Welle von den zwei drehzahl-regelbaren Nebenantrieben angetrieben wird. An der dritten Welle der Ausgangswelle ist eine Arbeitsmaschine angeschlossen.

Aus dem Stand der Technik sind Antriebsvorrichtungen mit einem Überlagerungsgetriebe bekannt, bei dem eine Hauptantriebsmaschine über die Eingangswelle das Hohlrad eines Planetengetriebes und ein regelbarer Nebenantrieb über eine Getriebestufe den Planetenträger antreibt, während die Arbeitsmaschine über die Ausgangswelle mit der Sonne verbunden ist. Durch eine solche Antriebsvorrichtung kann die Drehzahl an der Ausgangswelle in einem recht großen Drehzahlbereich stufenlos eingestellt werden und das bei konstant laufender Hauptantriebsmaschine.

Des Weiteren ist es möglich, die Hauptantriebsmaschine lastfrei anzuschleppen, indem der Nebenantrieb beim Hochlaufen jeweils die Drehzahl der Hauptantriebsmaschine einprägt. Erst wenn die Hauptantriebsmaschine in der Nähe der Nenndrehzahl ist und damit ein hohes Drehmoment aufbringen kann, wird die Last langsam beschleunigt, indem die Kompensation der Drehzahl durch den Nebenantrieb reduziert wird.

Eine konkrete Ausführung mit zwei Nebenantrieben ist beispielsweise in der Schrift DE 102015107934 A1 gezeigt. Hier ist nun wie bei solchen Vorrichtungen mit Planetengetriebe bisher üblich, die Antriebswelle der Hauptantriebsmaschine axial fluchtend mit der Ausgangswelle ausgeführt.

Weitere Ausführungen von Antriebsvorrichtungen mit Planetengetriebe und Nebenantrieben sind aus der DE 102014210870 A1 bekannt.

Genutzt werden solche Antriebsvorrichtungen insbesondere zum Antreiben von Pumpen, Verdichtern oder Kompressoren mit großer Leistung, wie sie zum Beispiel in der Öl- und Gasindustrie oder in thermischen Kraftwerken verwendet werden. Dabei treten je nach Anwendung und Einzelfall sehr unterschiedliche Anforderungen in Bezug auf die gewünschten Übersetzungsverhältnisse und den notwendigen Regelbereich auf. Für die entsprechende Auslegung werden die Stirnräder des Überlagerungsgetriebes, über die die Nebenantriebe eingebunden sind, im Durchmesser an den Einzelfall angepasst. Diese Anwendungsspezifische Auslegung ist sehr aufwändig und verursacht hohe Kosten, da das Getriebe entsprechend modifiziert werden muss.

Für den Antrieb von Diesellokomotiven ist in der DE 612823 B ein elektromechanisches Getriebe beschrieben, das ebenso ein Planetengetriebe und Nebenantriebe umfasst.

Die Aufgabe der Erfindung ist es nun, eine verbesserte Lösung für die Antriebsvorrichtung zu finden, so dass die Auslegung und Anpassung an die Anforderungen bezüglich Drehzahlverhältnissen und Regelbereich im Einzelfall einfacher und kostengünstiger erfolgen kann. Insbesondere für die Nachrüstung in bestehenden Anlagen soll eine wirkungsgradverbessernde Drehzahlregelung mit möglichst geringen Kosten möglich werden.

Die Aufgabe wird durch eine Antriebsvorrichtung gemäß Anspruch 1 gelöst. Weitere vorteilhafte Merkmale der erfindungsgemäßen Ausführung, die die Vorrichtung noch zusätzlich verbessern, finden sich in den entsprechenden Unteransprüchen. Die erfindungsgemäße Antriebsvorrichtung wird dabei so ausgeführt, dass eine Schmierölpumpe, in einer Öffnung des Getriebegehäuses angeordnet, vorhanden ist, welche über ein Stirnrad auf der Eingangswelle angetrieben werden kann, wobei das Stirnrad zwischen Hauptantriebsmaschine und Planetengetriebe angeordnet ist.

Unter einem gestuften Zwischenrad wird in diesem Zusammenhang ein Stirnrad mit zwei in axialer Richtung nebeneinander angeordneten Verzahnungsbereichen verstanden, die sich jeweils über den Umfang erstrecken und die jeweils mit verschiedenen weiteren Stirnrädern in Eingriff sind. Alternativ kann das Zwischenrad auch durch zwei Stirnräder gebildet werden, die auf einer gemeinsamen kurzen Welle sitzen. Die zwei Verzahnungsbereiche oder die zwei Stirnräder können gleichen Durchmesser oder bevorzugt verschiedenen Durchmesser aufweisen.

Als Räderkette wird hier eine Triebverbindung bezeichnet, die über mehrere insbesondere mindestens zwei Stirnradpaare also mindestens vier Stirnräder erfolgt.

Durch die Verwendung einer Räderkette mit zumindest einem gestuften Stirnrad ergibt sich ein parallel angeordneter Aufbau der Stirnradpaarungen - im Gegensatz zum ausschließlich in Reihe angeordneten Aufbau einer Räderkette, bei dem jedes Stirnrad auf einer eigenen Welle sitzt. Durch den parallelen Aufbau ist es möglich, die Achsabstände und die Räderdurchmesser weitgehend konstant zu halten und nur in einer Stirnradpaarung Anpassungen vorzunehmen, um jegliche Über- oder Untersetzungsverhältnisse darstellen zu können. Insbesondere können so beispielsweise die Achsabstände zwischen den Nebenantriebswellen und der Eingangswelle konstant bleiben, was es ermöglicht, unabhängig von der gewünschten Übersetzung immer die gleiche Gehäusestruktur für das Überlagerungsgetriebe zu verwenden. Das bietet enorme Vereinfachungen und Kostenvorteile bei der konstruktiven Auslegung und der Fertigung der Antriebsvorrichtungen. Weitere entsprechende Verbesserungen ergeben sich dadurch, dass auch die Räderdurchmesser bis auf eine Paarung unabhängig von den Anforderungen des Einzelfalles gleich bleiben können.

Insbesondere ist es bevorzugt, wenn die Hauptantriebsmaschine nur drehzahlkonstant betreibbar ist und die Nebenantriebe drehzahlgeregelt betreibbar sind. Besonders bei großen Antriebsleistungen ermöglicht das eine kostengünstigere Umsetzung. Ein Großteil der Antriebsleistung kann von der konstant betriebenen Hauptantriebsmaschine aufgebracht werden. Diese benötigt keinen Frequenzumformer, was Investitionskosten spart. Bevorzugt wird die Hauptantriebsmaschine als Mittelspannungsmotor ausgeführt, also mit einer Spannung von mehr als 1 kV. Die Drehzahlregelung erfolgt über die Nebenantriebe, die eine geringere Leistung benötigen und die bevorzugt als Niederspannungsmotoren mit einer Spannung von weniger als 1 kV ausgeführt sind. Somit fallen die dafür benötigten Frequenzumformer kleiner und kostengünstiger aus.

Weiterhin ist es vorteilhaft, die Eingangswelle mit dem Hohlrad, die Abtriebswelle mit dem Sonnenrad und die Nebenantriebe über je eine Triebverbindung mit konstanter Übersetzung mit dem Planetenträger zu verbinden. Eine so ausgeführte Vorrichtung ist insbesondere gut geeignet für hohe Drehzahlen am Abtrieb, wie sie beispielsweise bei schnelllaufenden Kompressoren oder bei großen Ventilatoren gefordert sind.

Für eine bevorzugte Ausführung ist die Abtriebswelle des Planetengetriebes gleichzeitig auch die Ausgangswelle des Überlagerungsgetriebes. Das ist besonders vorteilhaft, wenn Eingangswelle und Ausgangswelle koaxial angeordnet sein sollen.

In einer weiteren bevorzugten Ausführung ist an die Abtriebswelle des Planetengetriebes eine Stirnradstufe angeschlossen ist, über die das Überlagerungsgetriebe mit der Ausgangswelle derart verbunden ist, dass ein Achsversatz zwischen Eingangswelle und Ausgangswelle vorhanden ist. Durch den Achsversatz wird es möglich, dass einer der Nebenantriebe niedriger und damit der erste und der zweite Nebenantrieb auf unterschiedlicher Höhe in z-Richtung angeordnet sind. Obwohl eine zusätzliche Getriebestufe vorgesehen ist, hat sich herausgestellt, dass man mit deutlich geringerem Bauraum auskommen kann und dass sich eine deutlich höhere Flexibilität für die Anpassung an bestehende geometrische Randbedingungen ergibt.

Zusätzlich ist es von Vorteil für die Schwerpunktlage der Vorrichtung, wenn einer der Nebenantriebe tiefer angeordnet ist. Und des Weiteren bietet die erfindungsgemäße Vorrichtung viel mehr Flexibilität bei der Lage der Eingangs- und Ausgangswelle, da nun auch Getrieberegelkupplungen mit Achsversatz ohne aufwändige Umbauten in der Peripherie ersetzt werden können. Auch weitere geometrische Randbedingungen bei solchen sogenannten Retrofit-Anwendungen können leichter eingehalten werden.

Bevorzugt liegen die zwei Nebenantriebe auf der Seite der Hauptantriebsmaschine. Der Vorteil liegt darin, dass auf der Abtriebsseite im Bereich der Arbeitsmaschine keinerlei weiterer Platz für die Antriebsvorrichtung benötigt wird.

Alternativ können die zwei Nebenantriebe auf der Seite der Ausgangswelle, also der Arbeitsmaschine angeordnet sein, wenn beispielsweise auf der Seite der Hauptantriebsmaschine kein geeigneter Bauraum zur Verfügung steht.

Um die Montage und Wartung zu vereinfachen, ist es von Vorteil, wenn das Gehäuse durch eine Teilfuge trennbar ausgeführt ist und einen Gehäusedeckel und ein Gehäuseunterteil aufweist. Weiterhin können die zwei Nebenantriebe direkt am Gehäusedeckel angeordnet sein, wobei das Überlagerungsgetriebe und die Teilfuge derart ausgeführt sind, dass der Gehäusedeckel mit den zwei Nebenantrieben demontiert werden kann, während das Gehäuseunterteil mit Hauptantriebsmaschine, Planetengetriebe und Abtriebswelle eingebaut bleiben kann. Das vereinfacht die Montage und Demontage noch zusätzlich.

Erfindungsgemäß ist eine Schmierölpumpe vorhanden, welche über ein Stirnrad auf der Eingangswelle angetrieben werden kann, wobei das Stirnrad zwischen Hauptantriebsmaschine und Planetengetriebe angeordnet ist. Somit ist eine zuverlässige Schmierölversorgung unabhängig von der Drehzahl am Getriebeausgang gewährleistet Des Weiteren ist die Schmierölpumpe servicefreundlich von der Antriebsseite aus zugänglich, wenn entsprechende Öffnungen zur Montage/Demontage im Getriebegehäuse vorgesehen sind.

Um bei ausgefallener Hauptantriebsmaschine einen Notbetrieb oder ein kontrolliertes Herunterfahren zu ermöglichen, kann noch zumindest eine weitere Triebverbindung vorgesehen werden, die die Nebenantriebe mit der Eingangswelle der Antriebsvorrichtung verbindet. Wobei in dieser zusätzlichen Triebverbindung zumindest eine Schaltkupplung vorgesehen ist, die die Triebverbindung trennen oder einkuppeln kann. Und wobei diese zusätzliche Triebverbindung eine konstante Übersetzung aufweist. Dadurch kann ein Großteil der Energie für das Herunterbremsen durch Umbeschleunigung in den Nebenantrieben verzehrt werden. Eine unzulässige Überdrehzahl des Getriebes wird damit verhindert.

Besonders bevorzugt kann für jeden Nebenantrieb jeweils eine zusätzliche Triebverbindung mit Schaltkupplung vorgesehen werden. Dadurch dass zwei Schaltkupplungen vorhanden sind, können diese kleiner und kostengünstiger ausgelegt werden, ohne dass für sie im Einsatzfall ein Risiko der Überlastung besteht.

Des Weiteren kann die so ausgeführte Vorrichtung für kleine Abtriebsdrehzahlen alleine mit den Nebenantrieben angefahren oder betrieben werden.

Besonders bevorzugt erfolgt die jeweilige zusätzliche Triebverbindung von einem Nebenantriebsrad über ein gestuftes Zwischenrad auf ein Stirnrad auf der Zwischenwelle und über dieses auf ein Stirnrad auf der Eingangswelle. Die Schaltkupplung ist in dieser Version bevorzugt auf der Zwischenwelle angeordnet und kann das Stirnrad auf der Zwischenwelle auskuppeln oder einkuppeln.

In einer anderen bevorzugten Ausführung kann die jeweilige zusätzliche Triebverbindung über ein Nebenrad, welches auf einer Nebenantriebswelle angeordnet ist, und über ein unabhängig gelagertes Stirnrad auf ein Stirnrad auf der Eingangswelle wirken. Die Schaltkupplung ist hierbei auf der Nebenantriebswelle angeordnet und kuppelt das Nebenrad aus oder ein kann. Alternativ dazu kann die zusätzliche Triebverbindung vom Planetenträger ausgehend über eine separate Koppelwelle mit zwei Koppelrädern auf das Hohlrad erfolgen. Das bietet den Vorteil dass die Anordnung sehr kompakt und damit bauraumsparend ausgeführt werden kann. Bevorzugt ist eines der beiden Koppelräder über die vorhandene Schaltkupplung auf der Koppelwelle befestigt.

In einer weiteren erfindungsgemäßen Ausführung sind die Schaltkupplungen bevorzugt an einem freien Wellenende angeordnet. Das bietet den Vorteil, dass die Steuerölversorgung für die Schaltkupplung sehr unkompliziert über eine axiale Bohrung in der Welle erfolgen kann.

Anhand von Ausführungsbeispielen werden weitere vorteilhafte Ausprägungen der Erfindung erläutert unter Bezugnahme auf die Zeichnungen. Die genannten Merkmale können nicht nur in der dargestellten Kombination vorteilhaft umgesetzt werden, sondern auch einzeln untereinander kombiniert werden. Die Figuren zeigen im Einzelnen:
- **Fig.1**: Antriebsvorrichtung mit zwei Nebenantrieben in Draufsicht
- **Fig.2**: Antriebsvorrichtung mit schaltbarer zusätzlicher Kopplung zwischen Nebenantrieb und Eingangswelle
- **Fig.3**: erfindungsgemäße Antriebsvorrichtung mit Schmierölpumpe
- **Fig.4-5**: noch weitere Antriebsvorrichtungen mit weiteren Triebverbindungen jeweils zwischen Nebenantrieb und Eingangswelle

Nachfolgend werden die Figuren detaillierter beschrieben. Gleiche Bezugszahlen bezeichnen gleiche beziehungsweise analoge Bauteile oder Komponenten.

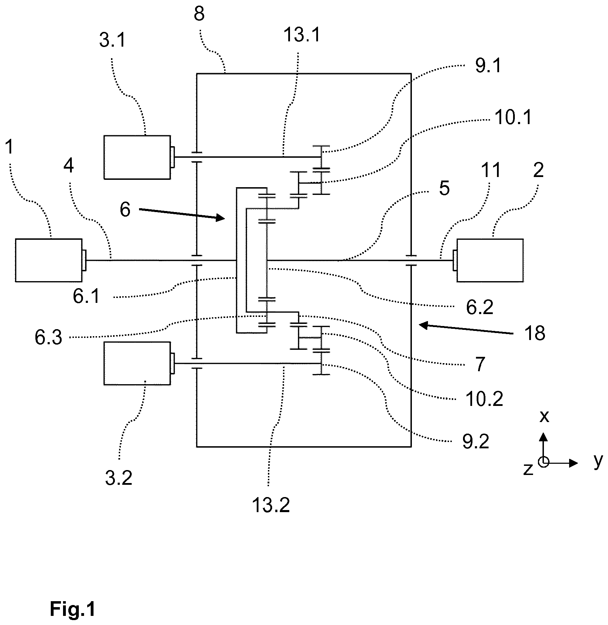

In **Fig.1** ist eine Antriebsvorrichtung gezeigt, die über die Ausgangswelle 11 an die Arbeitsmaschine 2 angebunden ist. Die Arbeitsmaschine 2 kann beispielsweise eine Pumpe, ein Kompressor, ein Ventilator oder ein Gebläse sein. Es kann auch ein Förderbandantrieb oder eine Mühle oder eine ähnliche Maschine sein. Insbesondere eine Arbeitsmaschine 2 mit großer Leistung, bei der es besonders wichtig ist, einen Antrieb mit hohem Wirkungsgrad zu haben. Aufgrund der Größe des Antriebs ist es dann auch entscheidend, dass der benötigte Bauraum nicht zu groß wird.

Das in der Antriebsvorrichtung vorhandene Überlagerungsgetriebe 18 weist ein Gehäuse 8 auf und umfasst ein Planetengetriebe 6. Im dargestellten Fall wird die Ausgangswelle 11 direkt durch die Abtriebswelle 5 des Planetengetriebes gebildet.

Es kann in der Ausführung allerdings auch eine hier nicht dargestellte Stirnradstufe vorgesehen sein, die aus zwei Stirnrädern gebildet wird und die die Abtriebswelle 5 des Planetengetriebes mit der Ausgangswelle 11 der Antriebsvorrichtung verbindet. Durch die Stirnradstufe kann ein Achsversatz zwischen der Eingangswelle 4 und der Ausgangswelle 11 sehr flexibel je nach Anforderung ausgeführt werden. Der Achsversatz kann nicht nur in x-Richtung, sondern auch in Grenzen in z-Richtung vorhanden sein. So lässt sich die Antriebsvorrichtung gut an bestehende Verhältnisse zum Beispiel bei der Nachrüstung in bestehenden Anlagen anpassen.

Die Eingangswelle 4 verbindet die Hauptantriebsmaschine 1 mit dem Hohlrad 6.1 des Planetengetriebes und die Abtriebswelle 5 ist an das Sonnenrad 6.2 angeschlossen. Über den Planetenträger 7 mit mehreren Planetenrädern 6.3 erfolgt die Triebverbindung zwischen Hohlrad 6.1 und Sonnenrad 6.2.

Zusätzlich sind zwei Nebenantriebe 3.1, 3.2 vorgesehen, die jeweils über eine Triebverbindung an den Planetenträger 7 angeschlossen sind. Dass diese jeweils über eine separate Triebverbindung angebunden sind, hat den Vorteil, dass die nötigen Getriebestufen und Komponenten dann kleiner dimensioniert werden können, als wenn beide Nebenantriebe 3.1,3.2 über eine gemeinsame Getriebestufe angebunden sind. Die jeweilige Triebverbindung erfolgt in dieser Ausführung mit Hilfe einer Räderkette über je ein Nebenantriebsrad 9.1,9.2, welches auf der Nebenantriebswelle 13.1,13.2 sitzt, und über je ein gestuftes Zwischenrad 10.1,10.2 mit jeweils zwei Verzahnungsbereichen, wovon einer in die Außenverzahnung am Planetenträger 7, der als Großrad ausgebildet oder mit einem Großrad verbunden ist, eingreift.

Ein besonderer Vorteil der hier beschriebenen Gestaltung der Triebverbindungen ist, dass sehr variable Übersetzungen möglich sind und trotzdem viele Komponenten, insbesondere die Gehäuseteile gleich gehalten werden können, da der Achsabstand nicht verändert werden muss, um unterschiedliche Übersetzungsverhältnisse darzustellen.

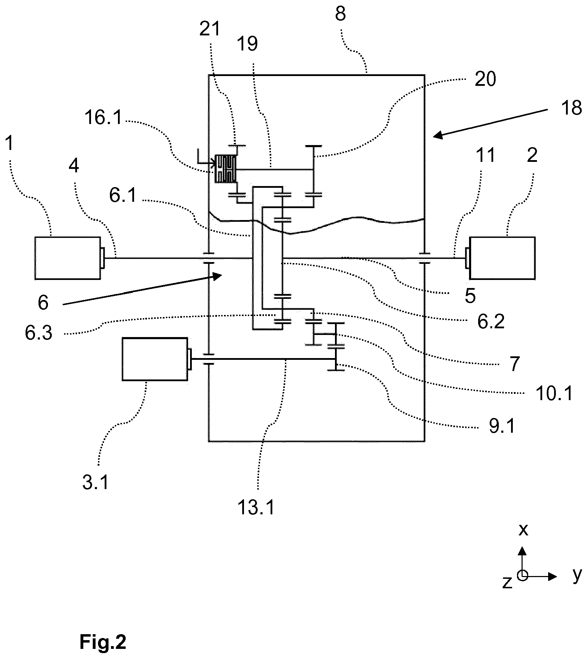

Im Ausführungsbeispiel entsprechend **Fig.2** ist eine zusätzliche Triebverbindung mit konstantem Übersetzungsverhältnis zwischen Nebenantrieben 3.1 und Eingangswelle 4 vorhanden, wobei diese hier indirekt ausgeführt ist. Sie erfolgt vom Plantetenträger 7 auf das erste Koppelrad 20 und über die Koppelwelle 19 auf das zweite Koppelrad 21 welches in einen Zahnkranz am Hohlrad 6.1 des Planetengetriebes 6 eingreift. Auch somit ist eine Triebverbindung zwischen den Nebenantrieben 3.1 und der Eingangswelle 4 hergestellt. Die Triebverbindung zwischen Nebenantrieb und Planetengetriebe - hier auf den Planetenträger 7 einwirkend - erfolgt wiederum über das Nebenantriebsrad 9.1 und das gestufte Zwischenrad 10.1. Die Schaltkupplung 16.1 liegt günstiger Weise so am freien Wellenende der Koppelwelle, dass eine einfache Steuerölversorgung über eine axiale Bohrung in der Welle erfolgen kann.

Die Nebenantriebe 3.1 sind wiederum über das Nebenabtriebsrad 9.1 und das gestufte Zwischenrad 10.1 an den Planetenträger 7 angekoppelt. Der zweite Nebenantriebsstrang ist in dieser Darstellung nicht explizit gezeigt.

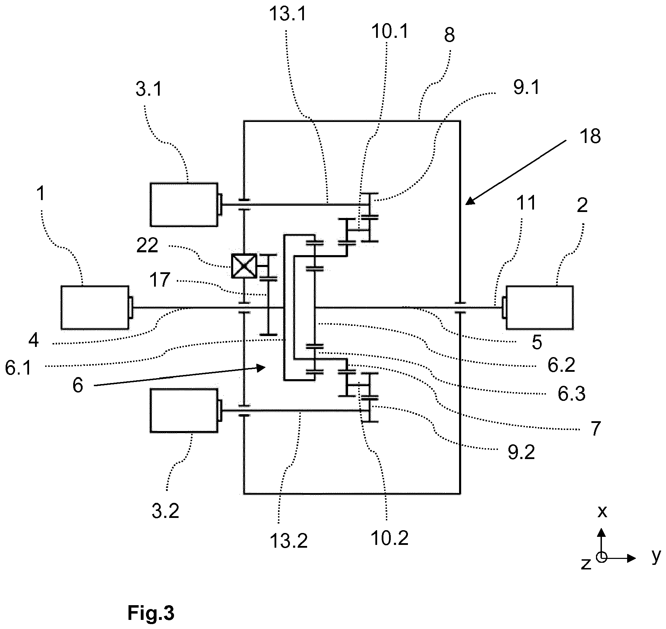

**Fig.3** stellt eine Ausführungsform der erfindungsgemäßen Antriebsvorrichtung dar. Im Unterschied zu der in Fig.1 gezeigten Ausführung ist hier noch eine Schmierölpumpe 22 mit einem Stirnrad vorhanden, welches über das Stirnrad 17 angetrieben wird, das auf der Eingangswelle zwischen Hauptantriebsmaschine 1 und Hohlrad 6.1 des Planetengetriebes positioniert ist. Die Schmierölpumpe 22 ist servicefreundlich und gut zugänglich in einer Öffnung des Getriebegehäuses 8 angeordnet, bevorzugt im Gehäuseoberteil in z-Richtung über der Eingangswelle 4.

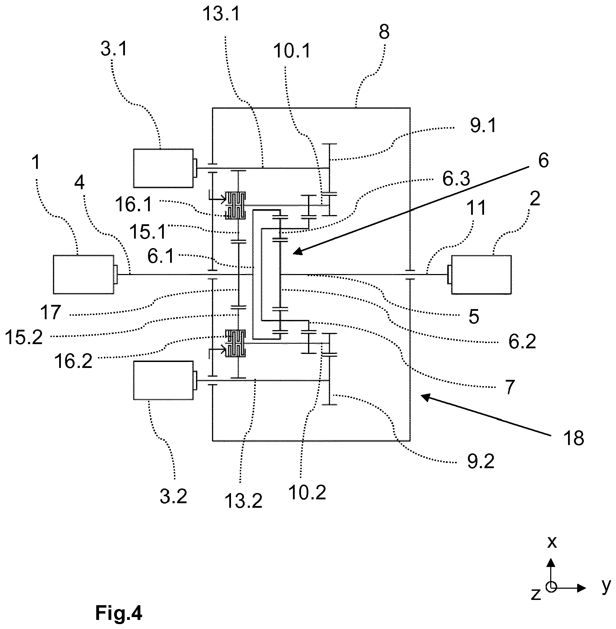

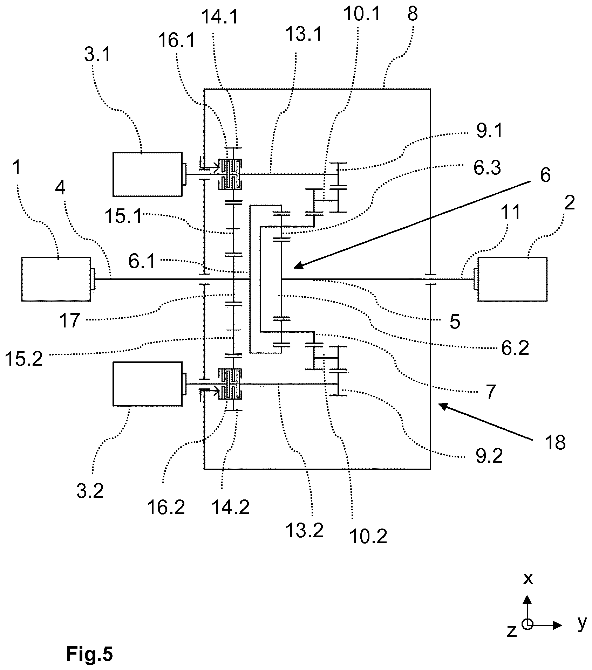

**Fig.4** und **Fig.5** zeigen weitere Ausführungsbeispiele, bei denen jeweils noch eine zusätzliche Triebverbindung zwischen dem jeweiligen Nebenantrieb 3.1,3.2 und der Eingangswelle 4 vorgesehen ist. Eine optional vorhandene Stirnradstufe zwischen Abtriebswelle 5 und Ausgangswelle 11, welche einen Achsversatz ermöglicht, ist wiederum aus Vereinfachungsgründen hier nicht explizit dargestellt.

In den zusätzlichen Triebverbindungen sind jeweils eine Schaltkupplung 16.1.,16.2 vorgesehen. Dadurch das auch diese Triebverbindung für jeden Nebenantrieb 3.1,3.2 separat vorhanden ist, können wiederum die Schaltkupplungen sowie weitere Komponenten kleiner und damit günstiger und bauraumsparender ausgelegt werden. Die zusätzlichen Triebverbindungen zwischen den Nebenantrieben 3.1,3.2 und der Eingangswelle 4 dienen beispielsweise dazu, die Antriebsvorrichtung bei stehender Hauptantriebsmaschine 1 mit Hilfe der Nebenantriebe 3.1,3.2 zu starten oder bei kleiner Drehzahl zu betreiben oder um bei ausgefallener Hauptantriebsmaschine 1 einen kontrollierten Notbetrieb beziehungsweise ein kontrolliertes Herunterfahren zu ermöglichen. In beiden Fällen ist es notwendig, dass die Triebverbindungen ein- und ausgeschaltet werden können, was in diesem Fall über die Schaltkupplungen 16.1,16.2 erfolgt, welche an verschiedenen Positionen in der Triebverbindung angeordnet werden können. Im eingekuppelten Zustand können die Nebenantriebe die Hauptantriebsmaschine bei kleinen Drehzahlen oder im Notbetrieb ersetzen. Je nach Bedarf kann auch nur ein Nebenantrieb eingekuppelt werden.

In **Fig.4** ist eine Variante dargestellt, bei der die Schaltkupplungen 16.1,16.2 zwischen der verlängerten Zwischenwelle der gestuften Zwischenräder 10.1,10.2 und den Stirnrädern 15.1,15.2 sitzen. Die Stirnräder 15.1,15.2 greifen beide in das Stirnrad 17 auf der Eingangswelle 4 ein. Die Verbindung von den Nebenantriebe 3.1,3.2 erfolgt über verlängerte Nebenantriebswellen 13.1,13.2 und die Nebenantriebsräder 9.1,9.2, die in die gestuften Zwischenräder 10.1,10.2 auf der jeweiligen Zwischenwelle eingreifen.

Besonders vorteilhaft ist bei dieser Ausführung, dass die Schaltkupplungen 16.1,16.2 an einem freien Wellenende angeordnet sind. Dadurch kann eine Steuerölversorgung für die Schaltung über eine Axialbohrung an diesem freien Wellenende erfolgen. Durch die geschickte, in y-Richtung versetzte Anordnung ist die Antriebsvorrichtung trotz der zusätzlichen Funktionalitäten wiederum besonders kompakt.

Bei der in **Fig.5** gezeigten Variante sitzen die Schaltkupplungen 16.1,16.2 direkt auf der jeweiligen Nebenantriebswelle 13.1,13.2. Die an der Schaltkupplung 16.1,16.2 angeschlossenen Nebenräder 14.1,14.2 greifen jeweils in das Zwischenrad 15.1,15.2 ein, welche auf das gemeinsame Stirnrad 17 auf der Eingangswelle 4 wirken. Der Vorteil dieser Ausführung ist unter anderem, dass keine verlängerten Zwischenwellen notwendig sind, sondern direkt über einfache Stirnradstufen auf die Eingangswelle 4 eingewirkt werden kann.

Über die verschiedenen Stirnradstufen kann das Übersetzungsverhältnis für diese zusätzlichen Triebverbindungen gut an die benötigten Drehzahlen angepasst werden.

### Bezugszeichenliste

- 1: Hauptantriebsmaschine
- 2: Arbeitsmaschine
- 3.1, 3.2: erster und zweiter Nebenantrieb
- 4: Eingangswelle
- 5: Abtriebswelle
- 6: Planetengetriebe
- 6.1: Hohlrad
- 6.2: Sonnenrad
- 6.3: Planetenräder
- 7: Planetenträger
- 8: Gehäuse
- 9.1, 9.2: erstes und zweites Nebenantriebsrad
- 10.1, 10.2: erstes und zweites gestuftes Zwischenrad
- 11: Ausgangswelle
- 13.1, 13.2: erste und zweite Nebenantriebswelle
- 14.1, 14.2: erstes und zweites Nebenrad
- 15.1, 15.2: erstes und zweites Stirnrad
- 16.1, 16.2: erste und zweite Schaltkupplung
- 17: Stirnrad auf Eingangswelle
- 18: Überlagerungsgetriebe
- 19: Koppelwelle
- 20: erstes Koppelrad
- 21: zweites Koppelrad
- 22: Schmierölpumpe mit Stirnrad
- x: Breite
- y: Länge
- z: Höhenrichtung

## Patentansprüche

1. Antriebsvorrichtung umfassend ein Überlagerungsgetriebe (18) mit einem Planetengetriebe (6), eine Hauptantriebsmaschine (1), die mit einer Eingangswelle (4) des Überlagerungsgetriebes verbunden ist, zwei Nebenantriebe (3.1,3.2), die über je eine Triebverbindung mit dem Planetengetriebe (6) verbunden sind, eine Ausgangswelle (11) des Überlagerungsgetriebes, welche mit einer Arbeitsmaschine (2) verbunden werden kann, wobei das Planetengetriebe (6) ein Hohlrad (6.1), ein Sonnenrad (6.2), einen Planetenträger (7) und mehrere Planetenrädern (6.3) aufweist, wobei diese Triebverbindungen der Nebenantriebe (3.1,3.2) jeweils über eine Räderkette (9.1,10.1,9.2,10.2) mit je einem gestuften Zwischenrad (10.1,10.2) erfolgt, wobei die Eingangswelle (4) mit dem Hohlrad (6.1), die Abtriebswelle (5) mit dem Sonnenrad (6.2) und die Nebenantriebe (3.1,3.2) über eine Triebverbindung (9.1,10.1,9.2,10.2) mit konstanter Übersetzung mit dem Planetenträger (7) verbunden sind
**dadurch gekennzeichnet,**
**dass** eine Schmierölpumpe (22), in einer Öffnung des Getriebegehäuses (8) angeordnet, vorhanden ist, welche über ein Stirnrad (17) auf der Eingangswelle (4) angetrieben werden kann, wobei das Stirnrad (7) zwischen Hauptantriebsmaschine (1) und Planetengetriebe (6) angeordnet ist.

2. Vorrichtung nach Anspruch 1
**dadurch gekennzeichnet,**
**dass** die Hauptantriebsmaschine (1) nur drehzahlkonstant betreibbar ist und die Nebenantriebe (3.1,3.2) drehzahlgeregelt betreibbar sind.

3. Vorrichtung nach einem der vorherigen Ansprüche
**dadurch gekennzeichnet,**
**dass** eine Abtriebswelle (5) des Planetengetriebes (6) vorhanden ist, welche über eine Stirnradstufe mit der Ausgangswelle (11) derart verbunden ist, dass ein Achsversatz zwischen Eingangswelle (4) und Ausgangswelle (11) vorhanden ist.

4. Vorrichtung nach einem der vorherigen Ansprüche
**dadurch gekennzeichnet,**
**dass** die zwei Nebenantriebe (3.1, 3.2) auf der Seite der Hauptantriebsmaschine (1) angeordnet sind.

5. Vorrichtung nach einem der Ansprüche 1 bis 3
**dadurch gekennzeichnet,**
**dass** die zwei Nebenantriebe (3.1, 3.2) auf der Seite der Ausgangswelle (11) angeordnet sind.

6. Vorrichtung nach einem der vorherigen Ansprüche
**dadurch gekennzeichnet,**
**dass** die Schmierölpumpe (22) bevorzugt im Gehäuseoberteil in z-Richtung über der Eingangswelle (4) angeordnet ist.

7. Vorrichtung nach einem der vorherigen Ansprüche
**dadurch gekennzeichnet,**
**dass** zwischen den Nebenantrieben (3.1, 3.2) und der Eingangswelle (4) eine, bevorzugt je eine zusätzliche Triebverbindung mit konstanter Übersetzung besteht, welche so ausgeführt sind, dass diese über eine, bevorzugt je eine vorhandene Schaltkupplung (16.1,16.2) getrennt oder verbunden werden kann.

8. Vorrichtung nach Anspruch 7
**dadurch gekennzeichnet,**
**dass** die jeweilige zusätzliche Triebverbindung über ein Nebenantriebsrad (9.1,9.2), sowie jeweils über das gestufte Zwischenrad (10.1,10.2) auf ein Stirnrad (15.1,15.2) und über dieses auf ein gemeinsames Stirnrad (17) auf der Eingangswelle wirkt, wobei die Schaltkupplung (16.1,16.2) jeweils auf der Zwischenwelle (10.1,10.2) angeordnet ist und die Schaltkupplung jeweils das Stirnrad (15.1,15.2) auskuppeln oder einkuppeln kann.

9. Vorrichtung nach Anspruch 7
**dadurch gekennzeichnet,**
**dass** die jeweilige zusätzliche Triebverbindung über je ein Nebenrad (14.1, 14.2) auf der Nebenantriebswelle und je ein Stirnrad (15.1,15.2) auf ein gemeinsames Stirnrad (17) auf der Eingangswelle wirkt, wobei die Schaltkupplung (16.1,16.2) jeweils auf der Nebenantriebswelle angeordnet ist und die Schaltkupplung jeweils das Nebenrad (14.1, 14.2) auskuppeln oder einkuppeln kann.

10. Vorrichtung nach Anspruch 7
**dadurch gekennzeichnet,**
**dass** die zusätzliche Triebverbindung vom Planetenträger (7) ausgehend über eine separate Koppelwelle (19) mit zwei Koppelrädern (20, 21) auf das Hohlrad (6.1) erfolgt.

## Claims

1. Drive apparatus comprising a superimposition transmission (18) with a planetary transmission (6), a main drive machine (1) which is connected to an input shaft (4) of the superimposition transmission, two auxiliary drives (3.1, 3.2) which are connected via in each case one drive connection to the planetary transmission (6), an output shaft (11) of the superimposition transmission, which output shaft (11) can be connected to a mobile machine (2), the planetary transmission (6) having an internal gear (6.1), a sun gear (6.2), a planetary carrier (7) and a plurality of planetary gears (6.3), the said drive connections of the auxiliary drives (3.1, 3.2) being brought about in each case via a gear chain (9.1, 10.1, 9.2, 10.2) with in each case one stepped intermediate gear (10.1, 10.2), the input shaft (4) being connected to the internal gear (6.1), the driven shaft (5) being connected to the sun gear (6.2), and the auxiliary drives (3.1, 3.2) being connected via a drive connection (9.1, 10.1, 9.2, 10.2) with a constant transmission ratio to the planetary carrier (7), **characterized in that** there is a lubricating oil pump (22), arranged in an opening of the transmission housing (8), which can be driven via a spur gear (17) on the input shaft (4), the spur gear (7) being arranged between the main drive machine (1) and the planetary transmission (6).

2. Apparatus according to Claim 1, **characterized in that** the main drive machine (1) can be operated only at a constant rotational speed, and the auxiliary drives (3.1, 3.2) can be operated in a rotational speed-regulated manner.

3. Apparatus according to either of the preceding claims, **characterized in that** there is a driven shaft (5) of the planetary transmission (6), which driven shaft (5) is connected via a spur gear stage to the output shaft (11) in such a way that there is an axial offset between the input shaft (4) and the output shaft (11).

4. Apparatus according to one of the preceding claims, **characterized in that** the two auxiliary drives (3.1, 3.2) are arranged on the side of the main drive machine (1).

5. Apparatus according to one of Claims 1 to 3, **characterized in that** the two auxiliary drives (3.1, 3.2) are arranged on the side of the output shaft (11).

6. Apparatus according to one of the preceding claims, **characterized in that** the lubricating oil pump (22) is preferably arranged in the housing upper part above the input shaft (4) in the z-direction.

7. Apparatus according to one of the preceding claims, **characterized in that** there is an additional drive connection with a constant transmission ratio, preferably in each case one additional drive connection with a constant transmission ratio, between the auxiliary drives (3.1, 3.2) and the input shaft (4), which additional drive connections are configured in such a way that the said additional drive connection can be disconnected or connected via an available clutch (16.1, 16.2), preferably in each case one available clutch (16.1, 16.2) .

8. Apparatus according to Claim 7, **characterized in that** the respective additional drive connection acts via an auxiliary drive gear (9.1, 9.2), and in each case via the stepped intermediate gear (10.1, 10.2) on a spur gear (15.1, 15.2), and via the latter on a common spur gear (17) on the input shaft, the clutch (16.1, 16.2) being arranged in each case on the intermediate shaft (10.1, 10.2), and it being possible for the clutch to in each case disengage or engage the spur gear (15.1, 15.2).

9. Apparatus according to Claim 7, **characterized in that** the respective additional drive connection acts via in each case one auxiliary gear (14.1, 14.2) on the auxiliary drive shaft and in each case one spur gear (15.1, 15.2) on a common spur gear (17) on the input shaft, the clutch (16.1, 16.2) being arranged in each case on the auxiliary drive shaft, and it being possible for the clutch to in each case disengage or engage the auxiliary gear (14.1, 14.2).

10. Apparatus according to Claim 7, **characterized in that** the additional drive connection is brought about, starting from the planetary carrier (7), via a separate coupler shaft (19) with two coupler gears (20, 21) to the internal gear (6.1).

## Revendications

1. Dispositif d'entraînement comprenant une transmission de direction à entraînement croisée (18) pourvue d'un engrenage planétaire (6), une machine d'entraînement principale (1) qui est reliée à un arbre d'entrée (4) de la transmission de direction à entraînement croisée, deux entraînements secondaires (3.1, 3.2) qui sont reliés chacun à l'engrenage planétaire (6) par le biais d'une liaison motrice, un arbre de sortie (11) de la transmission de direction à entraînement croisée qui peut être relié à une machine de travail (2), l'engrenage planétaire (6) comportant une couronne dentée (6.1), une roue solaire (6.2), un porte-satellites (7) et une pluralité de satellites (6.3), chacune de ces liaisons motrices des entraînements secondaires (3.1, 3.2) étant effectuée par le biais d'une chaîne de roues (9.1, 10.1, 9.2, 10.2) pourvues chacune d'une roue intermédiaire étagée (10.1, 10.2), l'arbre d'entrée (4) étant relié à la couronne dentée (6.1), l'arbre de sortie (5) étant relié à la roue solaire (6.2) et les entraînements secondaires (3.1, 3.2) étant reliés au porte-satellites (7) par le biais d'une liaison motrice (9.1, 10.1, 9.2, 10.2) à transmission constante,
**caractérisé en ce que**
une pompe à huile de lubrification (22), disposée dans une ouverture du boîtier de transmission (8), est prévue qui peut être entraînée par le biais d'une roue droite (17) sur l'arbre d'entrée (4), la roue droite (7) étant disposée entre la machine d'entraînement principale (1) et l'engrenage planétaire (6).

2. Dispositif selon la revendication 1,
**caractérisé en ce que**
la machine d'entraînement principale (1) ne peut fonctionner qu'à une vitesse de rotation constante et les entraînements secondaires (3.1, 3.2) peuvent fonctionner à vitesse de rotation régulée.

3. Dispositif selon l'une des revendications précédentes,
**caractérisé en ce que**
un arbre de sortie (5) de l'engrenage planétaire (6) est prévu qui est relié à l'arbre de sortie (11) par le biais d'un étage à roue droite de telle sorte qu'un décalage axial est ménagé entre l'arbre d'entrée (4) et l'arbre de sortie (11).

4. Dispositif selon l'une des revendications précédentes,
**caractérisé en ce que**
les deux entraînements secondaires (3.1, 3.2) sont disposés du côté de la machine d'entraînement principale (1).

5. Dispositif selon l'une des revendications 1 à 3, **caractérisé en ce que**
les deux entraînements secondaires (3.1, 3.2) sont disposés du côté de l'arbre de sortie (11).

6. Dispositif selon l'une des revendications précédentes,
**caractérisé en ce que**
la pompe à huile de lubrification (22) est de préférence disposée dans la partie de boîtier supérieure dans la direction z au-dessus de l'arbre d'entrée (4).

7. Dispositif selon l'une des revendications précédentes,
**caractérisé en ce que**
une liaison motrice, de préférence une liaison motrice supplémentaire, à transmission constante est prévue entre chacun des entraînements secondaires (3.1, 3.2) et l'arbre d'entrée (4), lesquelles liaisons motrices sont conçues de manière à pouvoir être séparées ou reliées par le biais d'un embrayage, de préférence existant (16.1, 16.2).

8. Dispositif selon la revendication 7,
**caractérisé en ce que**
la liaison motrice supplémentaire respective agit sur une roue droite (15.1, 15.2) par le biais d'une roue d'entraînement secondaire (9.1, 9.2), ainsi que par le biais de la roue intermédiaire étagée (10.1, 10.2) et par le biais de ladite roue droite sur une roue droite commune (17) située sur l'arbre d'entrée, chacun des embrayages (16.1, 16.2) étant disposé sur l'arbre intermédiaire (10.1, 10.2) et chacun des embrayages pouvant se désaccoupler de la roue droite (15.1, 15.2) ou s'accoupler à celle-ci.

9. Dispositif selon la revendication 7,
**caractérisé en ce que**
chacune des liaisons motrices supplémentaires respectives agit par le biais d'une roue secondaire (14.1, 14.2) située sur l'arbre d'entraînement secondaire et une roue droite (15.1, 15.2) sur une roue droite commune (17) située sur l'arbre d'entrée, chacun des embrayages (16.1, 16.2) étant disposé sur l'arbre d'entraînement secondaire et chacun des embrayages pouvant se désaccoupler de la roue secondaire (14.1, 14.2) ou s'accoupler à celle-ci.

10. Dispositif selon la revendication 7,
**caractérisé en ce que**
la liaison motrice supplémentaire est effectuée sur la couronne dentée (6.1) depuis le porte-satellites (7) par le biais d'un arbre d'accouplement séparé (19) comprenant deux roues d'accouplement (20, 21).
